# EUROPÄISCHE PATENTSCHRIFT

(11) **EP 1 983 473 B1**
(45) Veröffentlichungstag und Bekanntmachung des Hinweises auf die Patenterteilung: **17.03.2010**
(21) Anmeldenummer: 08011514.0
(22) Anmeldetag: 08.11.2004
(51) Int. Cl.: G06K 19/14, B42D 15/10, G07F 7/08

(54) **Datenträger mit Kennzeichnungen**
Data carrier with codes
Support de données doté de caractérisations

(30) Priorität: 12.11.2003 DE 10353092
(43) Veröffentlichungstag der Anmeldung: 22.10.2008
(62) Teilanmeldung aus: 04818387.5
(73) Patentinhaber: Giesecke & Devrient GmbH, 81677 München (DE)
(72) Erfinder: Endres, Günter, 81547 München (DE); Kruse, Georg, 85609 Aschheim (DE); Riedl, Josef, 85395 Attenkirchen (DE)
(74) Vertreter: Zeuner, Stefan

(56) Entgegenhaltungen:
- EP-A- 0 956 975
- WO-A-02/36357
- US-A- 4 766 026

## Beschreibung

Die Erfindung betrifft einen Datenträger, in den mittels eines Laserstrahls Kennzeichnungen eingebracht sind, die in Form von durch den Laserstrahl bewirkten irreversiblen Änderungen der optischen Eigenschaften des Datenträgers sichtbar sind. Die Erfindung betrifft ferner ein Verfahren zum Herstellen eines derartigen Datenträgers sowie ein Verfahren zum Prüfen der Integrität solcher Datenträger.

Es ist bekannt, Ausweiskarten, wie beispielsweise Kreditkarten, Bankkarten oder Personalausweise, mittels Lasergravur zu personalisieren. Bei der Personalisierung durch Lasergravur werden durch geeignete Führung eines Laserstrahls die optischen Eigenschaften des Kartenmaterials in Gestalt einer gewünschten Kennzeichnung irreversibel verändert.

Beispielsweise enthält die in der Druckschrift DE 29 07 004 beschriebene Ausweiskarte zwei Deckfolien und ein Karteninlett, in welches durch eine der beiden Deckfolien hindurch mit einem Laserstrahl die Personalisierungsdaten eingeschrieben werden. Um die Reproduktion derartiger Ausweiskarten mit modernen Kopiergeräten zu erschweren, werden die Personalisierungsdaten oft in metallische Schichten vor einem dunklen Hintergrund eingebracht. Da der metallische Untergrund zu einer gerichteten Reflexion einfallender Lichtstrahlen führt und der Detektor in Kopiergeräten üblicherweise so angeordnet ist, dass er nur das von der Vorlage diffus gestreute Licht erfassen kann, erscheinen die metallischen Flächen und die eingebrachten Daten in der Kopie durchgängig schwarz.

Trotz des anerkannt hohen Sicherheitsniveaus von laserpersonalisierten Ausweiskarten besteht ein Restrisiko der Verfälschung als Folge einer Trennung von Kartenvorderseite- und Kartenrückseite und der dadurch möglichen Manipulationen innen liegender Informationen, wie beispielsweise Text und Bildobjekten. Insbesondere ist nach einer Trennung der Kartenfolien eine innen liegende Metallfolie verfälschbar oder austauschbar.

Ausgehend davon liegt der Erfindung die Aufgabe zugrunde, einen Datenträger der eingangs geschilderten Art mit einer erhöhten Fälschungssicherheit anzugeben. Darüber hinaus sollen Manipulationsversuche mit einfachen Mitteln und möglichst auch durch Laien feststellbar sein.

Diese Aufgabe wird durch den Datenträger mit den Merkmalen des Hauptanspruchs gelöst. Ein Verfahren zum Herstellen eines solchen Datenträgers sowie ein Verfahren zum Prüfen der Integrität derartiger Datenträger sind in den nebengeordneten Ansprüchen angegeben. Weiterbildungen der Erfindung sind Gegenstand der Unteransprüche.

Das Dokument US-A-4766026 offenbart einen Datenträger nach dem Oberbegriff des Anspruchs 1.

Die in den Datenträger eingebrachten Kennzeichnungen können beliebige Muster oder Zeichen enthalten. Besonderes gut eignen sich Kennzeichnungen, die ein von einem Original reproduziertes Halbtonmuster, insbesondere ein Bild, wie etwa ein Portrait, umfassen, da das menschliche Auge dort auch kleinste Abweichungen in der Deckungsgleichheit wahrnehmen kann. Das Halbtonmuster ist vorzugsweise in Rastertechnik eingebracht, wobei unterschiedliche Helligkeitsstufen des Halbtonmusters insbesondere durch eine unterschiedliche Rasterpunktdichte, eine unterschiedliche Rasterpunktgröße und/ oder durch eine unterschiedliche Rasterpunktschwärzung erzeugt sind.

Der Datenträger stellt bevorzugt eine Ausweiskarte, wie etwa eine Kreditkarte, Bankkarte, Barzahlungskarte, Berechtigungskarte, einen Personalausweis oder eine Passpersonalisierungsseite dar. Der Datenträger kann auch ein auf einer Trägerschicht angeordnetes Transferelement zum Aufbringen auf eine Ausweiskarte oder dergleichen darstellen.

Die Kennzeichnungen werden bevorzugt mit gepulster Laserstrahlung, vorzugsweise mit einer Wellenlänge im infraroten oder sichtbaren Spektralbereich eingebracht. Als Kennzeichnung wird mit Vorteil ein von einem Original reproduziertes Halbtonmuster in Rastertechnik eingesetzt, wobei unterschiedliche Helligkeitsstufen des Halbtonmusters insbesondere durch eine unterschiedliche Rasterpunktdichte, eine unterschiedliche Rasterpunktgröße und/ oder durch eine unterschiedliche Rasterpunktschwärzung erzeugt werden. Die Rasterpunktdichte wird dabei zweckmäßig zwischen 50 und 500 dpi (dots per inch), bevorzugt zwischen 150 und 250 dpi, besonders bevorzugt zwischen 170 und 200 dpi gewählt.

Insgesamt liefert die Erfindung eine deutliche Erhöhung der Sicherheit personalisierter Datenträger, wobei gleichzeitig eine einfache Überprüfbarkeit der Absicherung gegeben ist. Ohne wesentlichen Einfluss auf die Durchsatzleistung können etwa bei der Kartenherstellung in einem Arbeitsschritt drei Informationen zur Absicherung gegen Verfälschung in das Kartenmaterial eingebracht werden:
1) ein Photo, etwa auf der Kartenvorderseite,
2) ein Durchlichteffekt, der abhängig von der Art der Personalisierung ein Positiv- oder Negativbild liefert, und
3) eine Personalisierung einer metallisierten Folienschicht, gegenüberliegend und absolut deckungsgleich zu dem Photo auf der Kartenvorderseite.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig.1: die Vorderansicht einer Ausweiskarte nach einem Beispiel in schematischer Darstellung,
- Fig. 2: die Rückansicht der Ausweiskarte von Fig.1,
- Fig. 3: eine Schnittdarstellung der Ausweiskarte von Fig. 1 entlang der Linie III-III,
- Fig. 4, 5: Schnittdarstellungen weiterer Ausweiskarten nach anderen Beispielen.
- Fig. 6 bis 7: Schnittdarstellungen der Ausweiskarten nach Ausführungsbeispielen der Erfindung.

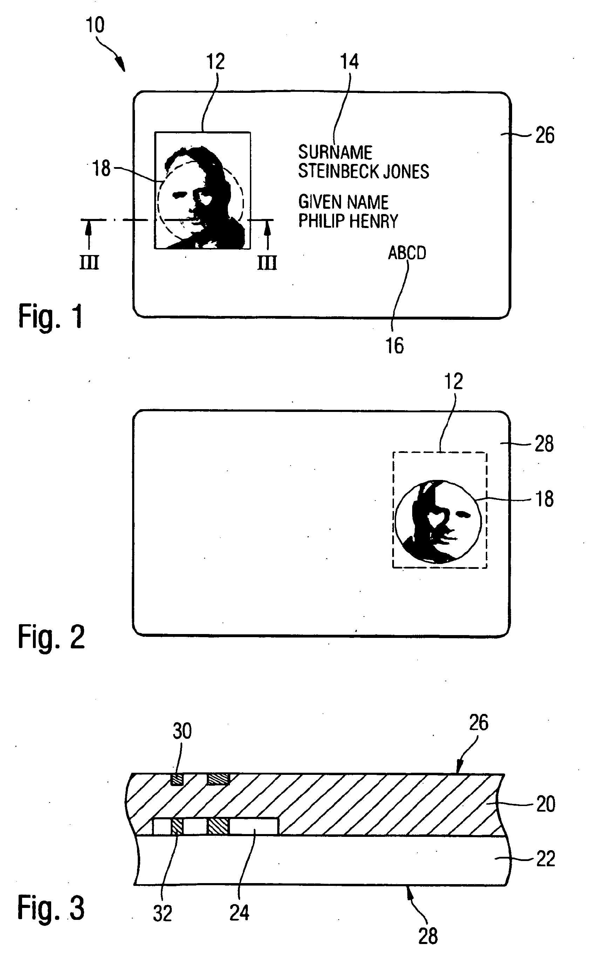

Die Fig.1 und 2 zeigen die Vorder- bzw. Rückansicht einer Ausweiskarte 10 in schematischer Darstellung. Die Ausweiskarte 10 enthält ein Portrait 12 des Karteninhabers sowie weitere personenbezogenen Daten 14, z.B. den Vor- und Nachnamen des Inhabers. Darüber hinaus kann die Ausweiskarte weitere personen- oder nichtpersonbezogene Daten 16, wie etwa Geburtsdatum, Nationalität, Ausstellungsbehörde, Ausstellungsdatum und dergleichen enthalten. Das Portrait 12 und der Name 14 der Ausweiskarte 10 dienen nur zur Illustration und entsprechen keiner realen Person.

Während die Vorderseite 26 der Ausweiskarte 10 das Portrait des Karteninhabers als gerastertes Halbtonbild 12 zeigt, ist von der Kartenrückseite 28 her ein Teil des Portraits in einer Metallfolie 18 sichtbar. Aufgrund ihrer weiter unten beschriebenen gleichzeitigen und passergenauen Erzeugung sind das Halbtonportrait 12 und das in die Metallfolie 18 eingeschriebene Portrait bei einer unversehrten Ausweiskarte 10 vollkommen deckungsgleich angeordnet.

Diese Deckungsgleichheit kann mit einfachen Hilfsmitteln, beispielsweise mit einer starken Taschenlampe oder bereits durch Betrachtung der Ausweiskarte gegen das Tageslicht überprüft werden. Bei einem Manipulationsversuch durch Trennung der Kartenfolien und Austausch oder Verfälschung der innen liegenden Metallfolie 18 wird die Deckungsgleichheit der beiden Portraits zerstört und kann dann nicht mehr mit der ursprünglichen Genauigkeit wiederhergestellt werden. Die Personalisierung der Kartenvorderseite und der innen liegenden Metallfolie wird somit wirkungsvoll und leicht überprüfbar abgesichert.

Der Schichtaufbau der Ausweiskarte 10 und ihre Herstellung werden nunmehr mit Bezug auf die vereinfachte schematische Darstellung der Fig. 3 erläutert. Im einfachsten Fall besteht die Ausweiskarte 10 aus einer im sichtbaren Spektralbereich opaken Kernschicht 20 und einer transparenten Folie 22, auf die in einem Teilbereich eine Metallschicht 24, beispielsweise eine Aluminium-, Kupfer- oder Goldschicht, aufgedampft ist.

Zur Personalisierung wird die Ausweiskarte 10 von der Kartenvorderseite 26 her mit gepulster, infraroter Laserstrahlung beaufschlagt. Die Kernschicht 20 ist dazu mit Zusatzstoffen dotiert, die in der Lage sind, die infrarote Laserstrahlung zu absorbieren und eine lokale Schwärzung 30 der Kernschicht 20 zu bewirken. Bei den Zusatzstoffen handelt es sich z.B. um Füllstoffe. Je nach Art des Füllstoffs und/oder des Füllstoffgehalts lässt sich die Absorption des Laserlichts und somit der Grad der Schwärzung steuern. Die Pulsenergie der Laserstrahlung ist so gewählt, dass sie durch die Kernschicht 20 hindurchgreift und in der Metallschicht 24 absorbiert wird. Durch den Einfluss der Laserstrahlung werden die optischen Eigenschaften der dünnen Metallschicht 24 in den erfassten Modifikationsbereichen 32 lokal so verändert, dass das von der Vorderseite her eingeschriebene Portrait bei Betrachtung von der Kartenrückseite 28 her spiegelverkehrt sichtbar ist. Die Zustandsänderung der Metallschicht 24 kann beispielsweise in einem teilweisen oder vollständigen lokalen Abtragen der Metallschicht oder in einer lokalen Umwandlung der Metallschicht in eine transparente oder transluzente Modifikation bestehen.

Im Beispiel wurde zum Einbringen der Kennzeichnungen ein Nd:YAG-Laser mit einer Wellenlänge von 1,064 µm, einem Strahldurchmesser von etwa 60 µm und einer Pulsenergie von bis zu 2 J/cm² eingesetzt. Auch andere Infrarotlaser, wie etwa Nd:Glas-Laser oder die längerwelligen CO₂-Laser, kommen für die Personalisierung in Frage. Es versteht sich, dass die jeweils konkret eingesetzten Laserparameter, wie Strahldurchmesser und Pulsenergie, auf die Anzahl und die Dicke der zu gravierenden Schichten abgestimmt werden.

Durch Abfahren der Bildfläche des Portraits 12 in einem festgelegten Raster und eine dem jeweiligen Schwärzungsgrad entsprechende Puls-zu-Puls-Variation der Laserleistung kann problemlos ein Halbtonbild, wie das Portrait 12, mit einer Auflösung von beispielsweise 200 dpi erzeugt werden.

Durch geeignete Wahl des Hintergrundes der Metallschicht 24 lässt sich bei Betrachtung von der Kartenrückseite 28 her ein Kippeffekt erzielen. Dabei kippt der Bildeindruck im Auflicht bei Änderung des Betrachtungswinkels unabhängig von der Kippachse von einer Positivdarstellung in eine Negativdarstellung um. Ohne an eine bestimmte Erklärung gebunden zu sein, wird die Kontrastumkehr dadurch erklärt, dass von der Rückseite her einfallendes Licht von den nicht modifizierten Bereichen der Metallschicht 24 gerichtet reflektiert wird, während es in den abgetragenen oder modifizierten Bereichen 32 diffus streut. Befindet sich der Betrachter im Raumwinkel der gerichteten Reflexion, so erscheint ihm die Metallschicht 24 heller als die modifizierten Bereiche 32, während ihm aus anderen Betrachtungswinkeln die diffus reflektierenden Bereich 32 unverändert hell, die Metallschichtbereiche jedoch dunkel erscheinen. Dieser Effekt ist dann besonders deutlich, wenn die Metallschicht 24 vor einem hellen, beispielsweise weißen oder pastellfarbenen Hintergrund angeordnet ist.

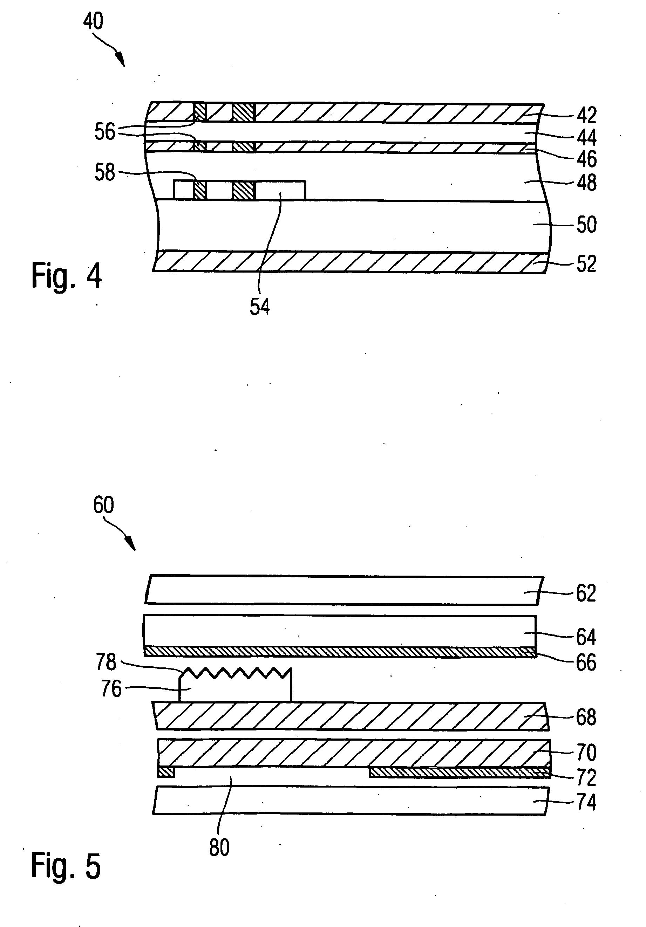

Fig. 4 zeigt ein weiteres Beispiel einer Ausweiskarte 40 mit einem komplexeren Schichtaufbau. Die Schichtenfolge der Ausweiskarte 40 umfasst eine transparente niedrigdotierte Folie 42, eine transparente undotierte Folie 44, eine transparente hochdotierte Folie 46, eine opake Folie 48, eine transparente undotierte Folie 50 und eine transparente niedrigdotierte Folie 52. Alle genannten Folien sind z.B. Polycarbonatfolien. Gegebenenfalls sind die Folien mit fluoreszierenden Eigenschaften ausgestattet.

Auf die transparente undotierte Folie 50 wurde vor dem Zusammenfügen der Folien eine Metallschicht 54, hier eine Aluminiumschicht, einer Dicke von einigen zehntel µm aufgedampft. Dann wurden die Folien laminiert und die so gebildete Karte, wie oben beschrieben, durch Lasergravur personalisiert. In den dotierten Folien 42 und 46 entstanden dabei durch die Absorption der Laserstrahlung lokale Schwärzungen 56. Gleichzeitig wurden durch die Laserstrahlung in den Modifikationsbereichen 58 die optischen Eigenschaften der Metallschicht 54 lokal und deckungsgleich mit den Schwärzungen 56 irreversibel verändert. In die dotierte Folie 52 können von der Rückseite der Ausweiskarte 40 her weitere Kennzeichnungen eingeschrieben sein.

Das Beispiel der Fig. 5 ist der deutlichen Darstellung halber in Explosionsdarstellung gezeigt, bei der die einzelnen Schichten noch nicht zusammengefügt und bei der die Personalisierung der Ausweiskarte 60 noch nicht erfolgt ist. Der Schichtaufbau der Ausweiskarte 60 umfasst eine transparente niedrigdotierte Folie 62, eine bedruckte transparente Folie 64, die undotiert oder niedrigdotiert sein kann, eine hochdotierte transparente Folie 68, die mit einer dünnen Metallschicht 76 versehen ist, eine bedruckte hochdotierte transparente Folie 70 und eine niedrigdotierte transparente Folie 74. Auch bei diesem Beispiel sind die genannten Folien Polycarbonatfolien. Die Folien können auch hier gegebenenfalls mit fluoreszierenden Eigenschaften ausgestattet sein.

Die Folien 64 und 70 sind jeweils mit einer Druckschicht 66 bzw. 72 versehen, wobei die Druckschicht 72 im Bereich der Metallschicht 76 oder zumindest im Bereich der eingebrachten Kennzeichnungen Aussparungen 80 aufweist, um den Blick auf die Kennzeichnungen freizugeben. Die Opazität des Kartenkörpers wird bei diesem Beispiel nicht durch eine opake Folie, sondern durch die zumindest in Teilbereichen opaken Druckschichten 66 und 72 erreicht. Insbesondere ist die Druckschicht 66 im Bereich der Metallschicht 76 opak. Die Druckschichten 66 und/oder 72 können auch mit Effektfarben, wie etwa Fluoreszenzfarben oder optisch variable Pigmente enthaltenden Farben, aufgebracht sein.

Im Beispiel ist die Metallschicht 76 durch ein Hologrammpatch mit einem Beugungsmuster 78 gebildet, das dem Betrachter zusätzlich zu dem oben beschriebenen Portrait in an sich bekannter Weise einen winkelabhängigen Bildeindruck liefert. Beispielsweise kann das Hologrammpatch ein winkelabhängiges Farbspiel oder ein sich beim Kippen bewegendes oder veränderndes Bildmotiv enthalten. Ein derartiges Hologrammpatch kann selbstverständlich bei allen geschilderten Ausführungsformen anstelle einer einfachen Metallschicht verwendet werden.

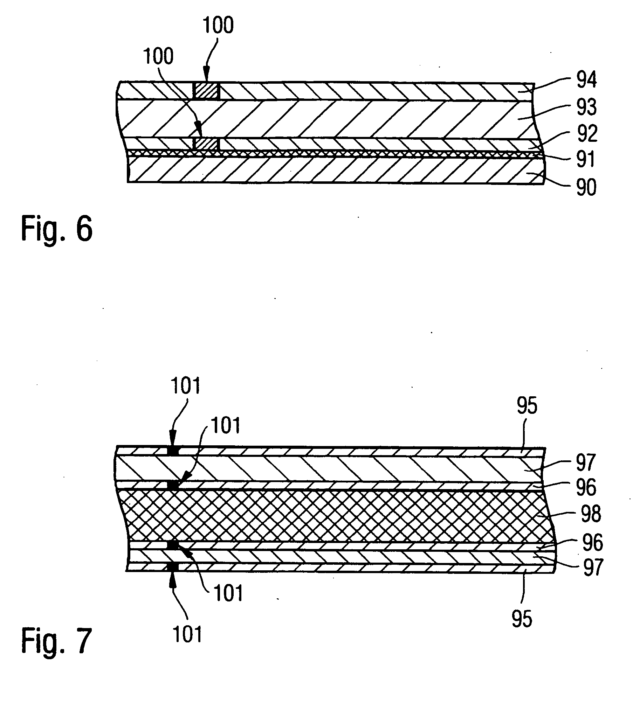

Fig. 6 zeigt ein erstes Ausführungsbeispiel einer erfindungsgemäßen Ausweiskarte. Die Schichtfolge der Karte umfasst eine transparente Folie 90, die mit einem fluoreszierenden Aufdruck 91 vollflächig bedruckt wurde. Darüber befindet sich eine metallische Schicht, vorzugsweise silber- oder goldfarben 92. Diese ist abgedeckt mit einer transparenten Folie 93, auf der sich wiederum eine metallische Schicht 94, die vorzugsweise silber- oder goldfarben ist, befindet. Die Metallschichten 94 und 92 haben vorzugsweise ein unterschiedlich metallisches Erscheinungsbild, so dass die Karte, jeweils von der Ober- und Unterseite betrachtet, ein unterschiedliches Erscheinungsbild aufweist. Dieser Kartenaufbau wird nun vonseiten der Schicht 94 mit Laserstrahlung beaufschlagt, so dass die Markierung 100 in den Schichten 92 und 94 erzeugt wird. Bei der Markierung handelt es sich in diesem Fall um einen Metallabtrag, so dass Aussparungen in der Metallschicht entstehen. Durch Beleuchtung der Karte mit UV-Strahlung vonseiten der Schicht 90 sind einem Betrachter, der die Karte von der Seite der Beschichtung 94 betrachtet, im Bereich der Aussparung 100 fluoreszierende Stellen erkennbar. Bei den Aussparungen 100, die dem Betrachter bei entsprechender Beleuchtung fluoreszierend erscheinen, kann es sich um bildhafte Darstellungen, wie aber auch um Codierungen handeln.

Fig. 7 zeigt ein zweites erfindungsgemäßes Ausführungsbeispiel. Bei den Schichten 95 handelt es sich um metallische Schichten, die auf eine transparente Folie 97 aufgedampft wurden. Bei den Schichten 96 handelt es sich ebenfalls um metallische Schichten, die auf der der metallischen Schicht 95 gegenüberliegenden Seite aufgedampft wurden. Diese beiden Schichtaufbauten wurden jeweils auf einer Seite einer mit einem fluoreszierenden Pigment dotierten Folie 98 auflaminiert. Bei Beaufschlagung dieses Aufbaus mit Laserstrahlung werden die Markierungen 101 in den Metallschicht erzeugt. Durch Entfernen der entsprechenden Metallschicht an den Stellen 101 kann bei entsprechender Beleuchtung mit Anregungsstrahlung der Betrachter wieder fluoreszierende Kennzeichen an den Stellen 101 erkennen.

## Patentansprüche

1. Datenträger, in den mittels eines Laserstrahls Kennzeichnungen (100, 101) eingebracht sind, die in Form von durch den Laserstrahl bewirkten irreversiblen Änderungen der optischen Eigenschaften des Datenträgers sichtbar sind, **dadurch gekennzeichnet, dass**
- der Datenträger zumindest eine erste (94, 95) und zumindest eine zweite (92, 96) Metallschicht aufweist, wobei zwischen der ersten Metallschicht (94, 95) und der zweiten Metallschicht (92, 96) eine transparente Folie (93, 97) angeordnet ist, die eine erste Seite der zweiten Metallschicht (92, 96) abdeckt,
- dass eine fluoreszierende Schicht (91, 98) vorgesehen ist, die eine zweite Seite der zweiten Metallschicht (92, 96) abdeckt, und
- dass die Kennzeichnungen (100, 101) gleichzeitig und passergenau in die erste Metallschicht (94, 95) und die zweite Metallschicht (92, 96) eingebracht sind, wobei die Kennzeichnungen (100, 101) Aussparungen in den Metallschichten sind, die durch Metallabtrag mittels des Laserstrahl erzeugt sind.

2. Datenträger nach Anspruch 1, **dadurch gekennzeichnet, dass** die fluoreszierende Schicht eine Druckschicht (91) ist, die auf die zweite Seite der zweiten Metallschicht (92) aufgedruckt ist.

3. Datenträger nach Anspruch 1, **dadurch gekennzeichnet, dass** die fluoreszierende Schicht eine mit einem fluoreszierenden Pigment dotierte Folie (98) ist.

4. Datenträger nach wenigstens einem der Ansprüche 1 bis 3, **dadurch gekennzeichnet, dass** die erste (94, 95) und/ oder zweite Metallschicht (92, 96) silber- oder goldfarben ist.

5. Datenträger nach wenigstens einem der Ansprüche 1 bis 4, **dadurch gekennzeichnet, dass** die erste (94, 95) und zweite Metallschicht (92, 96) ein unterschiedliches metallisches Erscheinungsbild aufweisen.

6. Datenträger nach wenigstens einem der Ansprüche 1 bis 5, **dadurch gekennzeichnet, dass** die Kennzeichnungen (100, 101) ein von einem Original reproduziertes Halbtonmuster, insbesondere ein Bild, wie etwa ein Portrait, umfassen.

7. Datenträger nach Anspruch 6, **dadurch gekennzeichnet, dass** das Halbtonmuster in Rastertechnik eingebracht ist, wobei unterschiedliche Helligkeitsstufen des Halbtonmusters insbesondere durch eine unterschiedliche Rasterpunktdichte und/oder eine unterschiedliche Rasterpunktgröße erzeugt sind.

8. Verfahren zum Herstellen eines Datenträgers nach wenigstens einem der Ansprüche 1 bis 7, bei dem
- ein Schichtaufbau bereitgestellt wird, der zumindest eine erste (94, 95) und zumindest eine zweite (92, 96) Metallschicht aufweist, wobei zwischen der ersten Metallschicht (94, 95) und der zweiten Metallschicht (92, 96) eine transparente Folie (93, 97) angeordnet ist, die eine erste Seite der zweiten Metallschicht (92, 96) abdeckt, und bei dem eine fluoreszierende Schicht (91, 98) vorgesehen ist, die eine zweite Seite der zweiten Metallschicht (92, 96) abdeckt, und bei dem
- der Schichtaufbau zum Einbringen der Kennzeichnungen (100, 101) von der Seite der ersten Metallschicht (94, 95) her mit Laserstrahlung beaufschlagt wird, wodurch die Kennzeichnungen (100,101) gleichzeitig und passergenau durch Metallabtrag mittels des Laserstrahls in die erste Metallschicht (94, 95) und die zweite Metallschicht (92, 96) eingebracht werden.

9. Verfahren nach Anspruch 8, **dadurch gekennzeichnet, dass** die Kennzeichnungen (100,101) mit gepulster Laserstrahlung, vorzugsweise mit einer Wellenlänge im infraroten Spektralbereich, eingebracht werden.

10. Verfahren nach Anspruch 8 oder 9, **dadurch gekennzeichnet, dass** als Kennzeichnung (100,101) ein von einem Original reproduziertes Halbtonmuster in Rastertechnik eingebracht wird, wobei unterschiedliche Helligkeitsstufen des Halbtonmusters insbesondere durch eine unterschiedliche Rasterpunktdichte und/oder eine unterschiedliche Rasterpunktgröße erzeugt wird, und wobei die Rasterpunktdichte zwischen 50 und 500 dpi, bevorzugt zwischen 150 und 250 dpi, besonders bevorzugt zwischen 170 und 200 dpi gewählt wird.

11. Verfahren zum Prüfen der Integrität eines Datenträgers nach einem der Ansprüche 1 bis 7 oder eines nach einem der Ansprüche 8 bis 10 herstellbaren Datenträgers, bei dem die Passergenauigkeit der Kennzeichnungen (100,101) in der ersten Metallschicht (94, 95) und der zweite Metallschicht (92, 96) durch Beleuchtung mit UV-Strahlung von der Seite der fluoreszierenden Schicht (91, 98) her überprüft und auf dieser Grundlage die Integrität des Datenträgers beurteilt wird.

## Claims

1. A data carrier into which, by means of a laser beam, identifiers (100, 101) are introduced that are visible in the form of irreversible changes in the optical properties of the data carrier, caused by the laser beam, **characterized in that**
- the data carrier exhibits at least a first (94, 95) and at least a second (92, 96) metal layer, there being arranged between the first metal layer (94, 95) and the second metal layer (92, 96) a transparent foil (93, 97) that covers a first side of the second metal layer (92, 96),
- a fluorescent layer (91, 98) is provided that covers a second side of the second metal layer (92, 96), and
- the identifiers (100, 101) are introduced into the first metal layer (94, 95) and the second metal layer (92, 96) simultaneously and in perfect register, the identifiers (100, 101) being gaps in the metal layers that are produced by metal ablation by means of the laser beam.

2. The data carrier according to claim 1, **characterized in that** the fluorescent layer is a printing layer (91) that is imprinted on the second side of the second metal layer (92).

3. The data carrier according to claim 1, **characterized in that** the fluorescent layer is a foil (98) doped with a fluorescent pigment.

4. The data carrier according to at least one of claims 1 to 3, **characterized in that** the first (94, 95) and/or second metal layer (92, 96) is silver or gold colored.

5. The data carrier according to at least one of claims 1 to 4, **characterized in that** the first (94, 95) and second metal layer (92, 96) exhibit a different metallic appearance.

6. The data carrier according to at least one of claims 1 to 5, **characterized in that** the identifiers (100, 101) comprise, reproduced from an original, a halftone pattern, especially an image, such as a portrait.

7. The data carrier according to claim 6, **characterized in that** the halftone pattern is introduced in screening technique, different brightness levels of the halftone pattern being produced especially by a different grid-point density and/or a different grid-point size.

8. A method for manufacturing a data carrier according to at least one of claims 1 to 7, in which
- a layer structure is provided that exhibits at least a first (94, 95) and at least a second (92, 96) metal layer, there being arranged between the first metal layer (94, 95) and the second metal layer (92, 96) a transparent foil (93, 97) that covers a first side of the second metal layer (92, 96), and in which a fluorescent layer (91, 98) is provided that covers a second side of the second metal layer (92, 96), and in which
- to introduce the identifiers (100, 101), the layer structure is impinged on with laser radiation from the side of the first metal layer (94, 95), through which the identifiers (100, 101) are introduced into the first metal layer (94, 95) and the second metal layer (92, 96) simultaneously and in perfect register through metal ablation by means of the laser beam.

9. The method according to claim 8, **characterized in that** the identifiers (100,101) are introduced with pulsed laser radiation, preferably having a wavelength in the infrared spectral range.

10. The method according to claim 8 or 9, **characterized in that**, as the identifier (100, 101), a halftone pattern reproduced from an original is introduced in screening technique, different brightness levels of the halftone pattern being produced especially by a different grid-point density and/or a different grid-point size, and the grid-point density being selected to be between 50 and 500 dpi, preferably between 150 and 250 dpi, particularly preferably between 170 and 200 dpi.

11. A method for checking the integrity of a data carrier according to one of claims 1 to 7 or a data carrier manufacturable according to one of claims 8 to 10, in which the register accuracy of the identifiers (100, 101) in the first metal layer (94, 95) and the second metal layer (92, 96) is checked by illumination with UV radiation from the side of the fluorescent layer (91, 98) and the integrity of the data carrier assessed on this basis.

## Revendications

1. Support de données, dans lequel, à l'aide d'un faisceau laser, des caractéristiques (100, 101) sont introduites, qui sont visibles sous forme de modifications irréversibles, provoquées par le faisceau laser, des propriétés optiques du support de données, **caractérisé en ce que**
- le support de données comprend au moins une première couche métallique (94, 95) et au moins une deuxième couche métallique (92, 96), une feuille transparente (93, 97), qui recouvre une première face de la deuxième couche métallique (92, 96), étant disposée entre la première couche métallique (94, 95) et la deuxième couche métallique (92, 96),
- une couche fluorescente (91, 98) est prévue, qui recouvre une deuxième face de la deuxième couche métallique (92, 96), et
- les caractéristiques (100, 101) sont introduites simultanément, en registre exact, dans la première couche métallique (94, 95) et dans la deuxième couche métallique (92, 96), les caractéristiques (100, 101) étant des évidements aménagés dans les couches métalliques, qui sont produits par ablation de métal à l'aide du faisceau laser.

2. Support de données selon la revendication 1, **caractérisé en ce que** la couche fluorescente est une couche imprimée (91), qui est imprimée sur la deuxième face de la deuxième couche métallique (92).

3. Support de données selon la revendication 1, **caractérisé en ce que** la couche fluorescente est une feuille (98) dopée par un pigment fluorescent.

4. Support de données selon au moins l'une des revendications 1 à 3, **caractérisé en ce que** la première couche métallique (94, 95) et/ou la deuxième couche métallique (92, 96) sont de couleur argent ou or.

5. Support de données selon au moins l'une des revendications 1 à 4, **caractérisé en ce que** la première couche métallique (94, 95) et la deuxième couche métallique (92, 96) présentent des aspects métalliques différents.

6. Support de données selon au moins l'une des revendications 1 à 5, **caractérisé en ce que** les caractéristiques (100, 101) comprennent un dessin en demi-teinte, reproduit à partir d'un original, en particulier une image, telle que par exemple un portrait.

7. Support de données selon la revendication 6, **caractérisé en ce que** le dessin en demi-teinte est introduit par une technique de tramage, des différences de gammes de tons du dessin en demi-teinte étant produites en particulier par des différences de densité et/ou des différences de grosseur des points de trame.

8. Procédé de fabrication d'un support de données selon au moins l'une des revendications 1 à 7, dans lequel :
- on réalise une structure de couches, qui comprend au moins une première couche métallique (94, 95) et au moins une deuxième couche métallique (92, 96), une feuille transparente (93, 97), qui recouvre une première face de la deuxième couche métallique (92, 96), étant disposée entre la première couche métallique (94, 95) et la deuxième couche métallique (92, 96), une couche fluorescente (91, 98) étant prévue, qui recouvre une deuxième face de la deuxième couche métallique (92, 96), et dans lequel
- la structure de couches est, pour introduire les caractéristiques (100, 101) à partir du côté de la première couche métallique (94, 95), exposée à un rayonnement laser, ce en conséquence de quoi les caractéristiques (100, 101) vont simultanément et en registre exact être introduites, par ablation de métal à l'aide du faisceau laser, dans la première couche métallique (94, 95) et dans la deuxième couche métallique (92, 96).

9. Procédé selon la revendication 8, **caractérisé en ce que** les caractéristiques (100, 101) sont introduites à l'aide d'un rayonnement laser pulsé, ayant de préférence une longueur d'onde se trouvant dans la gamme infrarouge du spectre.

10. Procédé selon la revendication 8 ou 9, **caractérisé en ce que**, en tant que caractéristiques (100, 101), on introduit par une technique de tramage un dessin en demi-teinte reproduit à partir d'un original, les différences de gamme de tons du dessin en demi-teinte étant produites en particulier par des différences de densité et/ou de grosseur des points de trame, la densité des points de trame étant choisie entre 50 et 500 dpi, de préférence entre 150 et 250 dpi, d'une manière particulièrement préférée entre 170 et 200 dpi.

11. Procédé pour contrôler l'intégrité d'un support de données selon l'une des revendications 1 à 7 ou d'un support de données fabriqué selon l'une des revendications 8 à 10, dans lequel on contrôle l'exactitude du registre des caractéristiques (100, 101) dans la première couche métallique (94, 95) et dans la deuxième couche métallique (92, 96) par exposition à un rayonnement laser, par le côté de la couche fluorescente (91, 98), et c'est sur cette base que l'on évalue l'intégrité du support de données.
